# EUROPEAN PATENT APPLICATION

(11) **EP 2 722 522 A1**
(43) Date of publication of application: **23.04.2014**
(21) Application number: 12189401.8
(22) Date of filing: 22.10.2012
(51) Int. Cl.: F03D 11/00

(54) **Lightning receptor arrangement for a wind turbine rotor blade**

(71) Applicant: Siemens Aktiengesellschaft, 80333 München (DE)
(72) Inventor: Bracht, Connie-Ann, 7400 Herning (DK); Olsen, Kaj, 8240 Riiskov (DK)

(57) **Abstract**

The invention describes a lightning receptor arrangement (10, 11, 12) for a wind turbine rotor blade (2), which lighting receptor arrangement (10, 11, 12) comprises a receptor element (10) for receiving a lightning strike; a drainage channel (11) extending from an interior cavity (210) of the blade (2) through the receptor element (10) to an outside surface (21) of the blade (2); and an electrically conductive connection (12) to a down conductor (3) of a grounding arrangement (3, 30, 31) of the wind turbine (2); wherein the receptor element (10) is arranged at a point of origin (Pₒᵥ) of a vortex (V) generated during rotation of the rotor blade (2). The invention further describes a rotor blade (2) for a wind turbine (4), which rotor blade (2) comprises such a lightning receptor arrangement (10, 11, 12). The invention further describes a wind turbine (4) comprising a number of rotor blades (2), wherein at least one rotor blade (2) comprises such a lightning receptor arrangement (10, 11, 12) connected to a grounding arrangement (3, 30, 31) of the wind turbine.

## Description

The invention describes a lightning receptor arrangement for a wind turbine rotor blade; a rotor blade, and a wind turbine.

During a thunderstorm, the electrical charges building up in a thundercloud result in the formation of channels of ionized air or "leaders". When a positively charged leader meets a negatively charged leader, the result is a visible lightning bolt. A cloud-to-ground lightning strike occurs when a leader forms between an exposed object on the ground (e.g. a tall building, a tree, a lighting rod, etc.). This is because the electric field is strongest at an object closer to the base of a thundercloud.

Wind turbines are vulnerable to lightning strikes on account of their height and isolated placement. A lightning strike to a wind turbine will generally strike a rotor blade. If the high currents cannot be safely diverted to ground, the blade can be seriously damaged or even destroyed. The heat that is generated by a lighting strike to a blade can melt the materials of the blade, or crack the composite epoxy material used to construct the blade, and can very rapidly transform any water present in the blade to steam. A sudden expansion of the steam in the confined interior of the blade can result in explosion of the blade. Various approaches have been implemented in an effort to reduce the risk of lightning damage to a blade. Usually, a conductive receptor is arranged in the tip region of the blade and bonded or connected in some way to a down conductor that travels the length of the blade and is connected in turn to further conductors that ultimately lead to ground. One or more conductive receptors are generally placed in the outermost tip regions, since the accepted understanding is that lightning will most likely strike an exposed object, and the tip of a rotor blade is the most exposed part of the blade.

Most rotor blades are equipped with one or more drainage channels for draining water from the blade. It is known that water is a good conductor. For this reason, most rotor blades are designed to place a drainage channel as far as possible from the tip, where one or more lightning receptors are located. The drainage channel may also be insulated in an attempt to make it less attractive than any receptors to a lightning strike. Another known lightning protection system for a rotor blade uses several receptors arranged in the blade tip portion, and combines one of these receptors with a water drainage channel in the outermost tip of the rotor blade. The receptors are all connected to a main receptor body further inward, to which the down connector is joined. However, even this solution is not entirely satisfactory, since the combined drainage channel and receptor has a relatively long path to the down conductor, and a lightning strike to the outermost receptor may result in rapid expansion of any air or water in the tip region. The materials in the path between the receptor and the down conductor may not be able to withstand lightning damage, so that burst epoxy and a cracked tip region may result.

It is therefore an object of the invention to provide an improved lightning protection arrangement for a wind turbine rotor blade, which overcomes the problems mentioned above.

This object is achieved by the lightning receptor arrangement of claim 1 for a grounding arrangement of a wind turbine rotor blade; by the rotor blade of claim 12, and by the wind turbine of claim 14.

According to the invention, the lightning receptor arrangement comprises a receptor element for receiving a lightning strike; a drainage channel extending from an interior cavity of the blade through the receptor element to an outside surface of the blade; and an electrically conductive connection to a down conductor of the grounding arrangement; wherein the receptor element is arranged at a point of origin of a naturally occurring vortex generated during rotation of the blade.

An advantage of the lightning receptor arrangement according to the invention is that the performance of the lightning receptor is significantly higher than the known arrangements, so that the safety of the rotor blade is significantly improved, i.e. the rotor blade is significantly less likely to suffer lightning damage. The invention makes use of information gathered during experimentation and research into the nature of a lightning strike to a wind turbine rotor blade. While prior art approaches have been based on knowledge derived from lightning strikes to stationary objects, the lightning receptor arrangement according to the invention uses a novel approach and takes into account the influence of the blade's rotation. Research carried out in the course of the invention shows that lightning impacts in most cases do not hit the tip of a blade, but are more likely to hit a point that is related to a point of entry of a naturally occurring blade vortex.

The natural blade vortex is created by the motion of the blade through the fluid medium, in this case air. The vortex may be visualized as an essentially helical channel or core of rotating air extending outward from the blade, and originating on or very close to the surface of the blade in the neighbourhood of the tip. The air in the vortex moves faster than the surrounding air, so that the air pressure in the vortex is lower than in the surrounding air, an effect known as the Venturi effect.

The "point of origin" of the vortex has been observed to lie at a distance from the tip. This is considered to be as a result of the blade geometry at its outer end. Usually, a wind turbine blade comprises an airfoil portion over much of its length, and tapers to a flat outer end before terminating at the tip. The inventors conclude that the vortex plays an important role during a thunderstorm since any ionized particles will actively collect in the vortex on account of the lower pressure in the vortex, so that the vortex itself acts as a leader originating at a point on the blade surface at a distance removed from the tip. The receptor element of the lightning receptor arrangement according to the invention is therefore not located at the tip or in the immediate vicinity of the tip (unlike in the known systems, which regard the blade tip as is the "highest point" and therefore the most attractive point, which might be correct if a wind turbine were a static system), but is instead located at the point of origin of the naturally occurring blade vortex. The low pressure channel of ionized air caused to develop by the naturally occurring vortex is a very favourable attractor or leader for a complementary leader originating from a thundercloud, so that a lighting strike can reliably be diverted along a favourably direct path into the down conductor of the rotor blade.

The drainage channel is to be understood as a channel for draining water out of the blade, and such a drainage channel has its entry opening in the interior of the blade and its exit opening on the exterior of the blade, so that any water inside the blade can drain to the outside. Because the receptor element and the drainage channel act as a single entity, the lightning receptor arrangement may simply be referred to as a "drainhole receptor" in the following.

According to the invention, the rotor blade for a wind turbine comprises such a lightning receptor arrangement.

An advantage of the rotor blade according to the invention is that it is protected from lightning damage owing to the reliable function of the lightning receptor arrangement. Such a rotor blade is therefore particularly robust and may therefore be expected to have a favourably long lifetime.

According to the invention, the wind turbine comprises a number of rotor blades, wherein at least one rotor blade comprises such a lightning receptor arrangement.

An advantage of the wind turbine according to the invention is that, since at least one of the blades will act as a reliable and safe attractor for lightning, the likelihood of lightning damage to the turbine is reduced, and the costs of maintenance to the wind turbine may be kept at a favourably low level.

Particularly advantageous embodiments and features of the invention are given by the dependent claims, as revealed in the following description. Features of different claim categories may be combined as appropriate to give further embodiments not described herein.

The position of the receptor element on the blade will have a marked influence on the interception efficiency of the lightning receptor arrangement, i.e. on its ability to attract a lightning strike. In a particularly preferred embodiment of the invention, the receptor element is arranged on the lee side of the rotor blade, since extensive observations and experiments performed during the course of the invention have surprisingly shown that a lightning impact will more likely occur on the lee side of the blade. The inventors conclude that this is as a result of the natural vortex of the blade and the resulting optimal suction conditions in this moving system, and since the vortex will tend to originate on the lee side of the blade. The inventive placement of the receptor element therefore contrasts strongly with the prior art solutions, which focus on attracting a lightning strike at the tip of a blade.

The distance between the receptor element and the tip will depend to a certain extent on the blade geometry and the overall blade length. Generally, a rotor blade comprises an airfoil portion over much of its length, and a relatively short outer end portion or blade tip. It has been observed that the point or region at which the natural blade vortex will tend to originate depends on various factors such as the blade length; the blade geometry; the presence of airflow-shaping elements such as winglets; gurney flaps or turbulators (sometimes also referred to as vortex generators, these are used to induce local turbulence, i.e. small vortices, over a blade surface in order to keep the airflow attached and are not related to the naturally occurring blade vortex considered here); etc. Preferably, a likely point of origin for a blade vortex and therefore a favourable placement of the receptor element are determined for a specific blade type on the basis of experimental data, for example using fluid dynamics simulation methods and/or theoretical calculations. For example, a naturally occurring blade vortex may be simulated or visualized using fluid dynamic concepts of vorticity and helicity. For a realistic assessment of the favourability of a placement for the lighting receptor, such a simulation preferably also considers relevant average parameters during thunder, such as wind load, wind speed etc.

The receptor element is preferably connected in a secure and reliable manner to the down conductor, and is also preferably secured firmly to the body of the rotor blade. Therefore, in a preferred embodiment of the invention, the drainhole receptor comprises a receptor block accommodated in the interior of the blade, which receptor block is realised for connection to the receptor element and to the down conductor. For example, the receptor block can be realised to have a shape that corresponds to an interior shape of the blade, so that the receptor block can be wedged into a cavity of the rotor blade and secured by adhesive or suitable fasteners. The receptor element and the down conductor are preferably secured to the receptor block in a suitable manner, for example by using conductive fasteners, by clamping, by friction welding, etc.

The receptor block is preferably highly conductive, so that a high current can be safely routed to the down conductor. In a particularly preferred embodiment of the invention, the receptor block comprises an aluminium body. Furthermore, aluminium is easily formed and is also favourably light, which is an important consideration since the receptor block is located relatively far out along the length of the rotor blade and therefore contributes to the centrifugal force acting on the blade. In a further preferred embodiment of the invention, the aluminium body of the receptor block comprises a suitable fraction of one or more further elements to improve its corrosion resistance. For example, the receptor block can be made of a wrought alloy comprising suitable percentages of aluminium, magnesium, and silicon. Such alloys are characterized by a very favourable resistance to corrosion and are therefore suitable for use in the marine environment of an offshore wind park.

The drainage channel could be realised as an additional part, for example a tube or conduit arranged between the receptor block and the blade and arranged to open onto a surface of the receptor element. Such a spatially separate drainage channel might offer an additional path to the current during a lightning strike, diverting some of the current away from the receptor block, and may therefore reduce the overall effectiveness of the lightning receptor arrangement. In a further preferred embodiment of the invention, therefore, the drainage channel extends through the receptor block. For example, the drainage channel may be realised as a bore or through-hole extending through the body of the receptor block. By realising the drainage channel in this manner, the drainage channel is incorporated in the drainhole receptor, and is therefore always part of the single main lightning path, so that the drainhole receptor provides a single very reliable and secure path for the current, directly to the down conductor. Preferably, the drainage channel entry opening is positioned close to the down conductor, so that the likelihood of a flash-over is reduced or eliminated.

Experiments carried out in the course of the invention have shown that when the receptor element is placed at the point of origin of the blade vortex area, most lightning impacts still hit the receptor even if a drainage channel or drain hole is not combined directly with the receptor block, i.e. even if the drain hole opens at a distance from the receptor block. However, it was observed that some lightning strikes are attracted by the drain hole, which either offers an additional current path ("flash-over"), since a leader can build up at the drain hole, or even as a single current path when the drainage channel is carrying a lot of water. Therefore, in a particularly preferred embodiment of the invention, the lightning receptor arrangement comprises a single receptor element and a single drainage channel. In this way, the lightning current is always concentrated at only one single impact point, namely the receptor block, without any parallel paths for the current, so that the effectiveness of the lightning receptor arrangement is favourably high.

In some known lightning protection systems for rotor blades, the receptors are made of tungsten or wolfram. However, disadvantages associated with tungsten are its relatively high cost and weight. Therefore, in a particularly preferred embodiment of the invention, the receptor element comprises a stainless steel body. Stainless steel has several advantages, for example it has good conductivity, is corrosion resistant, and can withstand deformation, even when subject to very high temperatures in the case of a lightning strike, on account of its relatively high melting point. Furthermore, even though stainless steel is a strong metal, it is relatively easy to machine and has a lower weight than tungsten. Stainless steel therefore offers a favourable balance between sufficient material strength to withstand deformation after an impact and sufficient thermal and conductive qualities for the reliable diversion of a lightning current to the receptor block.

To allow the receptor block to be arranged inside the rotor blade and the receptor element to protrude beyond the outer surface of the rotor blade, these components can be realised as separate elements that can be connected together. In a preferred embodiment of the invention, the receptor element can comprise a threaded portion arranged to complement a threaded bushing of the receptor block, so that the receptor element can simply be screwed into the receptor block. The depth and angle of the threads can be chosen to allow sufficient torque when tightening and to ensure a sufficiently "deep" connection. Such a threaded fastening provides a favourably robust physical and electrical interconnection of the receptor element and receptor block, so that these may, from an electrical point of view, be regarded as a single entity. In a particularly preferred embodiment of the invention, the drainage channel extends through the threaded portion of the receptor element.

During the lifetime of a lighting receptor arrangement in which the receptor element is made of steel and the receptor body is made of aluminium, galvanic corrosion may occur at a contact surface, for example a threaded connection between the steel receptor element and the aluminium receptor block, since the presence of an electrolyte (e.g. salty sea air) can make these metals act as anode and cathode, resulting in a breakdown of the aluminium at the contact surface and a deterioration of the lightning receptor function. Therefore, in a further preferred embodiment of the invention, a lower portion of the receptor element, which will come into physical contact with the receptor block, comprises aluminium. This lower portion is preferably bonded to the main receptor element body using a friction welding process. Preferably, the aluminium used in the lower portion of the receptor element is the same type of aluminium, for example the same aluminium alloy, used for the receptor block.

As already explained, the receptor block is preferably arranged so that the receptor element is positioned to coincide with a point of origin of the blade vortex. Therefore, the receptor block effectively forms a partition between an inner portion of the rotor blade and an outer, tip portion. Preferably, the receptor block is realised to essentially fill an interior cavity of the rotor blade, so that essentially all water collecting in the blade must pass through the drainage channel to the outside of the blade.

However, even a very tight fit of the receptor block may not be able to prevent some moisture from finding its way into the blade tip. Preferably, therefore, an interior cavity of the blade tip defined by the placement of the lightning receptor arrangement is essentially filled with a non-absorbent fill material such as a suitable foam material. Preferably, the fill material fills the interior space essentially completely, so that as little water as possible can enter that space. For example, a filler form can be used, for example a foam material that expands to essentially exactly fill the interior cavity of the blade tip portion. The use of such a foam or filler is preferable over the usual epoxy material in that part of the blade, since an epoxy filling may crack and burst in the event of a lightning strike, whereas foam is compressible and can therefore absorb the brunt of such a strike, thus avoiding damage to the blade tip portion beyond the drainhole receptor.

By realising the receptor element and receptor block of the drainhole receptor in the manner described above, and by arranging the drainage channel to extend through the receptor element and receptor block and to have its entry opening close to the down conductor, the drainhole receptor and the down conductor essentially have the same potential, and are connected to each other over a favourably short distances, thus providing an excellent and reliable attractor for a lightning strike. The drainhole receptor according to the invention fulfils three functions: the choice of material encourages the build-up of charge and therefore a leader for a lightning strike; the receptor form encourages a low-pressure or partial vacuum to establish over the receptor element, thus further facilitating the build-up of charges; and water is deliberately guided to the exit opening in the receptor element, thus further raising the attraction of the receptor element to a lightning strike.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a vortex relative to a moving rotor blade of a wind turbine;
Fig. 2 shows a schematic cross section of a rotor blade comprising a first embodiment of the lightning receptor arrangement according to the invention;
Fig. 3 shows a schematic cutaway of the rotor blade and a second embodiment of the lightning receptor arrangement according to the invention;
Fig. 4 shows a wind turbine according to an embodiment of the invention.

In the diagrams, like numbers refer to like objects throughout. Objects in the diagrams are not necessarily drawn to scale.

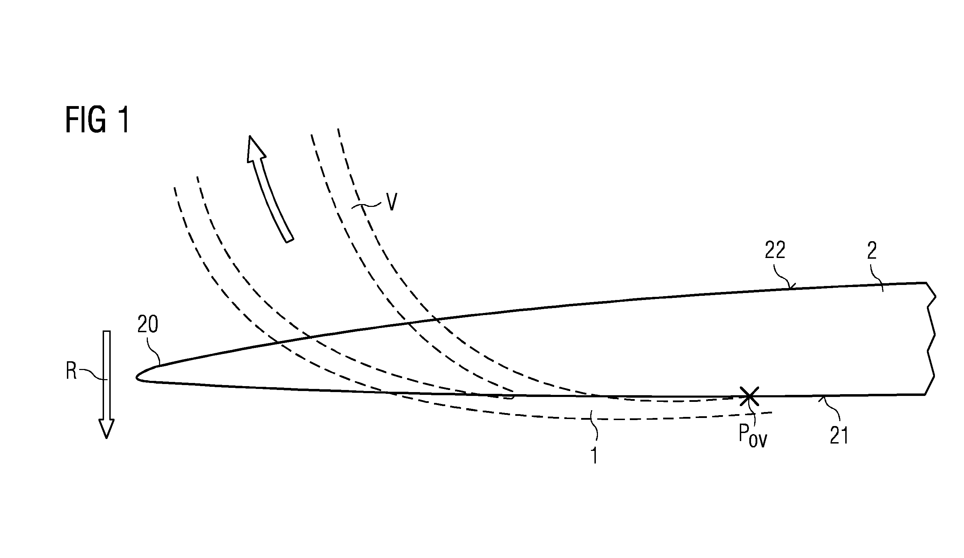

Fig. 1 shows a very simplified rendering of a naturally occurring blade vortex V relative to a moving rotor blade 2 of a wind turbine. The rotor blade 2 moves in the direction R shown, leaving the vortex V in the wake of its circular path through the air. The vortex V essentially comprises a rotating cone, conical helix or channel of air, moving at a higher velocity than the surrounding air, and may be described using the fluid dynamic concepts of vorticity and helicity. The air pressure in regions of the vortex V is therefore lower than the air pressure of the surrounding air, particularly close to the origin of the vortex and in the outer regions of the vortex. Low-pressure regions 1 in a cross-section of the vortex V are indicated in the diagram by the broken line. The naturally occurring vortex V "originates" at a point P_{OV} on the downwind or lee side 21 of the blade 2, i.e. on the surface of the blade 2 that faces into the direction of travel of the rotor blade 2. The point of origin P_{OV} is at a distance from the blade tip 20. The pressure difference in the vortex V encourages any ionized particles to collect in the vortex V, so that during a thunderstorm, the low-pressure region 1 of the vortex V acts as a "ready-made" leader for a lightning strike.

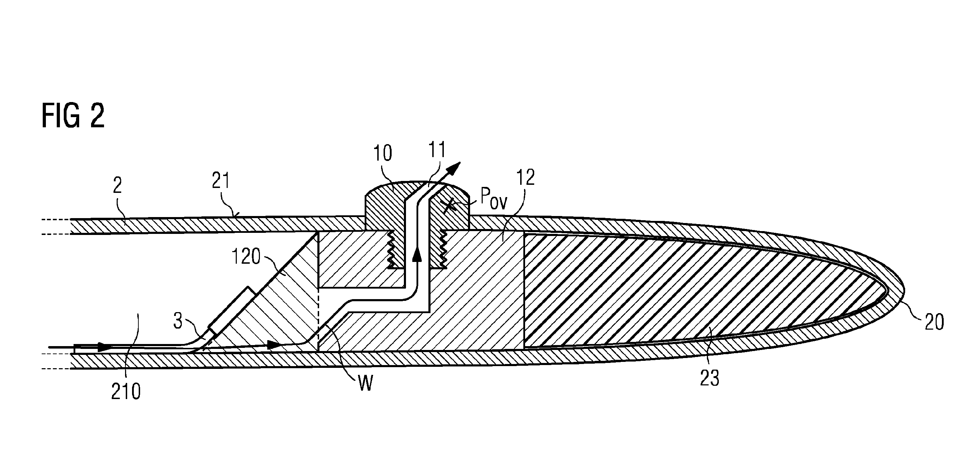

Fig. 2 shows a schematic cross section of a rotor blade 2 comprising a lightning receptor arrangement 10, 11, 12 according to an embodiment of the invention. A receptor element 10 is arranged to essentially coincide with the point of origin P_{OV} of a vortex for that blade type, i.e. at a point, zone or region determined using simulation or computation methods. A favourable position for the receptor element 10 can have been determined by a prior aerodynamic simulation, for example in a wind tunnel or by using appropriate software tools.

The receptor element 10 is connected to a receptor block 12 fitted into an interior cavity 210 of the blade 2. Here, the receptor element 10 is shown to fit into an opening in the blade 2 so that it can be mounted onto the receptor block 12. The receptor block 12 comprises a wedge-shaped portion 120 for convenient connection to a down conductor 3 that runs the length of the rotor blade 2 and that is connected to a further conductor of a grounding arrangement of the wind turbine (not shown here). The receptor block 12 and the receptor element 10 are formed so that a drainage channel 11 extends from an entry opening 110 in the receptor block 12 (in the interior of the blade 2) to an exit opening 111 in the receptor element 10 (on the outside of the blade 2). This drainage channel 11 allows water to freely flow out of the rotor blade 2 along the path W shown.

The receptor element 10 is shown to protrude above the surface 21 of the blade 2. This is only an exemplary embodiment and the receptor element 10 can equally well be realised to lie flush with the blade outer surface, to only protrude by a small amount, to have a flat upper surface, etc.

Wind speeds during a thunderstorm are generally not so high that a wind turbine would need to be halted, and the rotor blades usually continue to rotate during a thunderstorm, so that the drainhole receptor 10, 11, 12 arranged at the point of origin of the natural blade vortex offers a likely target for a lightning strike. However, in the event that a wind turbine has been halted because of very high winds during a thunderstorm so that the rotor blades 2 are stationary, the receptors are still positioned close enough to the blade tips to provoke an impact into them instead of to the blade. The drainhole receptor 10, 11, 12 is therefore effective even when the rotor blade is stationary.

The outermost end of the blade 2 is filled with an insulating and non-absorbent material such as a form filler 23 made of a suitable foam that has expanded to completely fill the cavity in the tip of the blade 2.

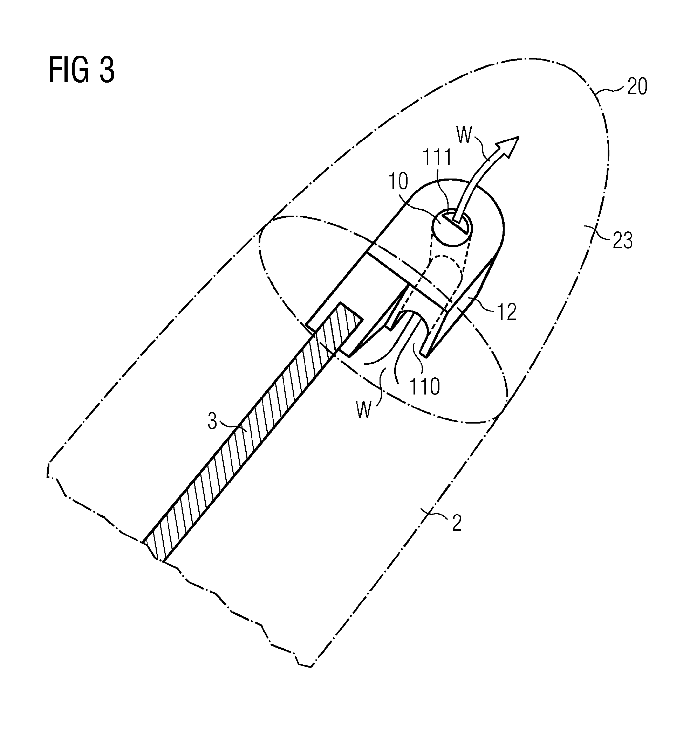

Fig. 3 shows a schematic cutaway of the rotor blade 2 and a second embodiment of the drainhole receptor 10, 11, 12 according to the invention. The diagram shows a compact arrangement of drainage channel entry opening 110 close to the down conductor 3 of the rotor blade 2, and the drainage channel exit opening 111 in the receptor element 10 on the outside of the blade 2. The receptor block 12 is shaped with a slanted portion 120 to which the down conductor can be secured, for example by welding or by a suitable pressure contact. The entry opening 110 of the drainage channel 11 is also formed in another slanted surface of the receptor block 12. In this embodiment, a foam filler 23 also extends partially around the receptor block 12.

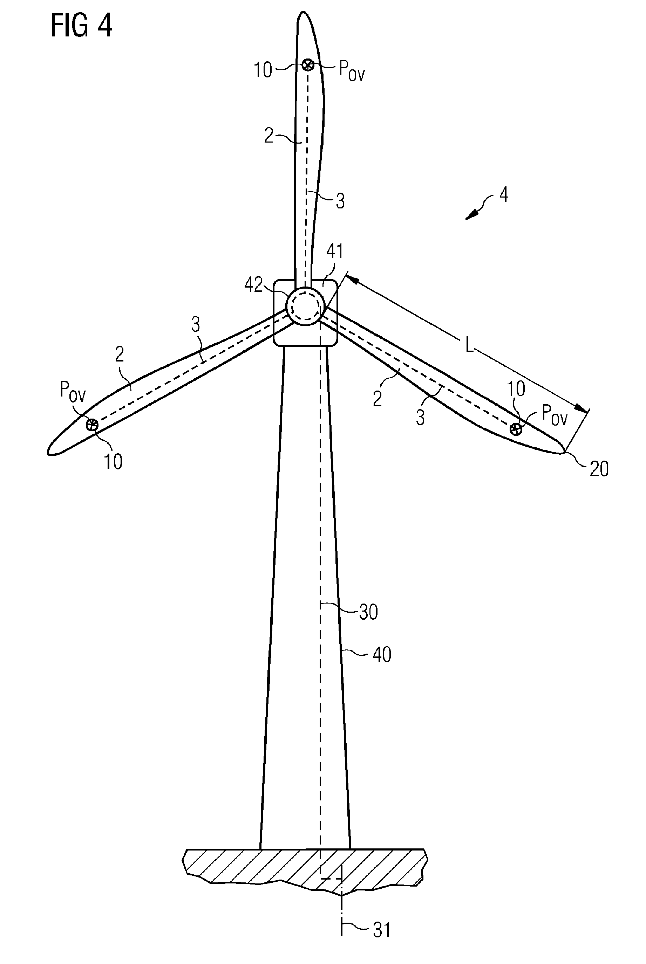

Fig. 4 shows a wind turbine 4 according to an embodiment of the invention. The wind turbine 4 comprises three rotor blades 2, each of which is equipped with a drainhole receptor according to the invention. The receptor element 10 of each drainhole receptor is positioned at a favourable point along the blade 2, coinciding with the point of origin P_{OV} of a vortex that will be established when the blade 2 rotates. The point of origin P_{OV} of the naturally occurring vortex can have been determined experimentally or theoretically, so that a receptor element 10 placed at this distance from the blade tip will likely coincide with the point at which the natural vortex will originate during rotation of the blade 2.

The schematic diagram indicates how the drainhole receptors are connected to down conductors 3 in the rotor blades 2, which in turn are connected to conductive elements in the hub 42 and nacelle 41, indicated by the broken lines, which conductive elements in turn are connected to lightning conductors 30 or cables 30 of a lightning protection system, indicated by the broken lines, that pass down through a concrete tower 40 for connection to an earthing system 31. Elements 3, 30, 31 of the lightning protection system are all at the same potential and may be regarded as a single entity. In case of a steel tower, the body of the tower itself can act as a down conductor of the lightning protection system. The effectiveness of the drainhole receptor according to the invention makes it more likely that a lightning strike is attracted to the drainhole receptor and away from any other possible target such as the nacelle 41 or hub 42, so that the electrical equipment in the turbine is more effectively protected from damage during a thunderstorm.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A lightning receptor arrangement (10, 11, 12) for a wind turbine rotor blade (2), which lighting receptor arrangement (10, 11, 12) comprises
- a receptor element (10) for receiving a lightning strike;
- a drainage channel (11) extending from an interior cavity (210) of the blade (2) through the receptor element (10) to an outside surface (21) of the blade (2); and
- an electrically conductive connection (12) to a down conductor (3) of a grounding arrangement (3, 30, 31) of the wind turbine (2);
wherein the receptor element (10) is arranged at a point of origin (P_{OV}) of a vortex (V) generated during rotation of the rotor blade (2).

2. A lightning receptor arrangement according to claim 1, wherein the receptor element (10) is arranged on the lee side (21) of the rotor blade (2).

3. A lightning receptor arrangement according to claim 1 or claim 2, wherein a placement of the receptor element (10) relative to the blade tip (20) is determined on the basis of experimental data for that blade (2).

4. A lightning receptor arrangement according to any of the preceding claims, wherein the receptor element (10) comprises a stainless steel body (10).

5. A lightning receptor arrangement according to any of the preceding claims, comprising an electrically conductive receptor block (12) accommodated in the interior of the blade (2), which receptor block (12) is realised for electrical connection to the receptor element (10) and to the down conductor (3).

6. A lightning receptor arrangement according to claim 5, wherein the drainage channel (11) extends through the receptor block (12).

7. A lightning receptor arrangement according to claim 5 or claim 6, wherein the receptor block (12) comprises an aluminium body (12).

8. A lightning receptor arrangement according to any of claims 5 to 7, wherein the receptor element (10) comprises a lower portion arranged for physical contact to the receptor block (12), which lower portion comprises aluminium.

9. A lightning receptor arrangement according to claim 8, comprising a friction-welded connection between the receptor element lower portion and the receptor element body.

10. A lightning receptor arrangement according to any of claims 5 to 9, comprising a threaded connection between the receptor element (10) and the receptor block (12).

11. A lightning receptor arrangement according to any of claims 5 to 9, wherein the receptor block (12) is realised to essentially fill an interior cavity of the rotor blade (2).

12. A rotor blade (2) for a wind turbine (4), which rotor blade (2) comprises a lightning receptor arrangement (10, 11, 12) according to any of claims 1 to 12.

13. A rotor blade according to claim 12, wherein an interior cavity of a blade outer region defined by the placement of the lightning receptor arrangement (10, 11, 12) is essentially filled with a non-absorbent fill material.

14. A wind turbine (4) comprising a number of rotor blades (2), wherein at least one rotor blade (2) comprises a lightning receptor arrangement (10, 11, 12) according to any of claims 1 to 10 connected to a grounding arrangement (3, 30, 31) of the wind turbine.

15. A wind turbine according to claim 14, wherein each rotor blade (2) comprises a lightning receptor arrangement (10, 11, 12) according to any of claims 1 to 10.
